# EUROPÄISCHE PATENTSCHRIFT

(11) **EP 2 503 376 B1**
(45) Veröffentlichungstag und Bekanntmachung des Hinweises auf die Patenterteilung: **19.02.2020**
(21) Anmeldenummer: 11159641.7
(22) Anmeldetag: 24.03.2011
(51) Int. Cl.: G01N 15/00, G01N 15/02, G02B 27/00, G02B 9/06

(54) **Vorrichtung und Verfahren zur Bilderfassung**
Device and method for imaging
Procédé et dispositif destinés à la capture d'images

(43) Veröffentlichungstag der Anmeldung: 26.09.2012
(73) Patentinhaber: FISBA AG, 9016 St. Gallen (CH)
(72) Erfinder: Langenbach, Eckhard, 9037, Speicherschwendi (CH)
(74) Vertreter: Hepp Wenger Ryffel AG

(56) Entgegenhaltungen:
- EP-A2- 1 471 514
- WO-A1-2009/059008
- WO-A1-2011/026029
- US-A- 4 095 775
- US-A1- 2006 171 041
- US-A1- 2006 274 431
- US-A1- 2007 242 319
- US-A1- 2009 325 217

## Beschreibung

Die Erfindung betrifft eine Vorrichtung sowie ein Verfahren zur Bilderfassung.

Bei Abbildungsvorrichtungen für die industrielle Bildverarbeitung sind of widersprüchliche Anforderungen zu erfüllen. Kleine Objekte in tiefen Objekträumen in kurzer Zeit aufzunehmen, ist nur schwer mit optischen Gesetzen vereinbar.

Bisher wurden hier Streulichtsensoren verwendet, die allerdings Partikel unterhalb einer bestimmten Partikelgrösse nicht erkennen können und die auch in Bezug auf die Messgeschwindigkeit begrenzt sind. Ein solches Verfahren ist beispielsweise aus der EP 1 102 059 bekannt. Daher sind diese Sensoren für schnelle online Messverfahren mit sehr kleinen Partikeln in tiefen Objekträumen nicht geeignet.

Es ist daher Aufgabe der vorliegenden Erfindung die Nachteile des Standes der Technik zu vermeiden und insbesondere eine Anordnung zu schaffen, mit der sich kleine Objekte mit hoher Schärfentiefe schnell messen lassen.

Zur Lösung der oben angegebenen Aufgabe wird eine Vorrichtung zur Erfassung von Bildern verwendet, die eine Abbildungsoptik, welche für wenigstens zwei unterschiedlichen Wellenlängen unterschiedlich Foki aufweist, einen Objektraum und einen Abbildungsraum umfasst. Mit anderen Worten wird also eine Optik verwendet, die nicht Farblängsfehler-korrigiert und/oder in die gezielt ein Farblängsfehler eingebracht ist. Im Abbildungsraum ist ein Bild vom Objektraum abbildbar. Des Weiteren ist im Abbildungsraum eine elektronische Aufnahmevorrichtung positioniert, die das empfangene Bild aus dem Objektraum aufnimmt. Für jede der Wellenlängen ist ein Bild in einer separaten Aufnahme erzeugbar, so dass pro Wellenlänge ein fokussiertes Bild entsteht. Eine solche Vorrichtung ermöglicht die quasi-gleichzeitige Aufnahme von mehreren fokussierten und zueinander beabstandeten Objektebenen in einer Aufnahme. Das aufgenommene Bild aus dem Objektraum wird bevorzugt in Farbauszüge, ein Auszug pro Wellenlänge zerlegt. Vorteilhaft bei einer solchen Ausgestaltung der Messvorrichtung ist, dass sich die Schärfentiefe im Vergleich zur Einzelaufnahme bei gleicher Auflösung mehr als verdoppelt. Dies ermöglicht auch die Erhöhung der Geschwindigkeit um den Faktor der verwendeten Bildebenen.

Nicht-Farblängsfehler-korrigierte Optiken sind bereits aus anderen Bereichen bekannt. Aus der DE 10 2008 050 796 ist eine Optik für eine Infrarotkamera bekannt mit der direkte Sonneneinstrahlung auf einen Detektor gedämpft werden kann. Durch einen Farblängsfehler, der durch eine Optik bestehend aus Zinksulfid und Zinkselenid nur in einem Wellenlängenbereich von 3-12 µm korrigiert wird, ist es möglich, ein Dämpfungselement auf eine Bildebene des nahen Infrarotbereiches (0.8-1.5µm) zu positionieren und so den Detektor vor zu starker Strahlung zu schützen. Eine solche Optik ist nur im Infrarotbereich verwendbar und daher für sichtbare Bilder nicht zu verwenden.

Die DE 196 12 846 zeigt die Verwendung eines Farblängsfehlers in einem konfokalen Mikroskop. Die Anforderung an die Genauigkeit ist bei einem Mikroskop sehr hoch, so dass alle andere optischen Fehler aus der Optik korrigiert sein müssen, um für die Mikroskopie verwendbar zu sein. Aus diesem Grund ist die Optik sehr aufwändig und durch konfokale Abbildung sehr langsam, da immer nur ein Bildpunkt abgetastet wird.

US-A1-2006/017041 und US-A1-200/0242319 zeigen die Verwendung eines Farblängsfehlers in einer Abbildungsoptik.

WO-A1-2009/059008 und WO-A1-2011/026029 zeigen optische Vorrichtungen, wobei die Beleuchtungseinrichtung dem Abbildungsraum gegenüber angeordnet ist relativ zum Objektraum und wobei für jede Wellenlänge eine separate Messung entsteht.

In der Abbildungsoptik sind bevorzugt mindestens eine Bi-Konvexlinse und eine Blende angeordnet.

Die Aufnahmevorrichtung ist bevorzugt eine Farbkamera. Die einzelnen Farben sind separat auslesbar. Des Weiteren lassen sich mit einer Farbkamera Tiefenmessungen durchführen, da die Abstände der Foki der Wellenlängen, je nach Optik- und Glasauswahl bekannt sind. Der Abstand der Partikel oder der Oberfläche vom Abbildungsraum wird verwendet, um die Position der Partikel oder der Oberfläche im Objektraum zu bestimmen und somit eine Tiefenmessung ermöglicht. Die Farbkamera ist typischerweise mit einem RGB-Bildsensor ausgestattet, wobei die Wahl der fokussierten Wellenlängen insbesondere auf den Bildsensor abgestimmt ist.

Bevorzugt ist eine im Wesentlichen plan-konvexe oder im Wesentlichen konkav-konvexe Linse zwischen der Bi-Konvexlinse und dem Objektraum in der Abbildungsoptik angeordnet. Hierdurch erhält man eine im Wesentlichen perfekte Optik mit einem Farblängsfehler.

Die Linsen in der Abbildungsoptik bestehen bevorzugt aus Kronglas, insbesondere bevorzugt aus Schott N-BK7-Glas oder ein äquivalentes Glas eines anderen Herstellers. Die Verwendung von Kronglas bewirkt die bewusste Induzierung eines Farblängsfehlers, der nicht herauskorrigiert wird. Hierbei entsteht auch ein Farbquerfehler, der korrigiert werden kann, falls es die Anwendung erfordert.

Die Vorrichtung ist mit einer Beleuchtungseinrichtung versehen, mit der der Objektraum beleuchtbar ist. Die Vorrichtung ist mit einer bezüglich einer zur optischen Achse senkrecht angeordneten im Wesentlichen durch die Mitte des Objektraums verlaufenden Ebene, gegenüber dem Abbildungsraum angeordneten Beleuchtungseinrichtung versehen. Eine solche telezentrische Anordnung hat den Vorteil, dass der Abbildungsmassstab unabhängig vom Objektabstand ist.

Die Beleuchtungseinrichtung ist bevorzugt mit einer Beleuchtungsoptik versehen, welche spiegelsymmetrisch zur Abbildungsoptik bezüglich der Mittelebene des Objektraumes aufgebaut ist. Diese telezentrische Anordnung erhöht weiterhin den Kontrast durch die Durchleuchtung.

Die Schärfentiefe pro Wellenlänge entspricht bevorzugt im Wesentlichen dem Abstand der Fokusebenen oder liegt in etwa im Bereich von 100%-200%, typischerweise 100%-120% des Abstandes der Fokusebenen. Hierbei ist ein Überlappen der Schärfentiefebereiche der nebeneinander angeordneten Fokusebenen erwünscht, um sämtliche Bereiche des Objektraumes abdecken zu können. Des Weiteren muss hier beachtet werden, dass bei der Wahl von beispielsweise drei Fokusebenen, die Abstände der Fokusebenen nicht gleich sind.

Die erfindungsgemäße Vorrichtung nach Anspruch 1 wird in einem Messverfahren zur Messung der Grösse, Menge und/oder Anwesenheit oder Geschwindigkeit von Partikeln in einem Fluid oder Gas oder in einem Verfahren zur Tiefenmessung verwendet.

Das erfindungsgemäße Messverfahren nach Anspruch 10 stellt ein Messverfahren dar, bei dem aus verschiedenen Wellenlängen bestehendes einfallendes Licht durch eine Abbildungsoptik in einem Abbildungsraum ein Bild von einem Objektraum abbildet, wobei die Abbildungsoptik innerhalb des Objektraums für wenigstens zwei Wellenlängen unterschiedliche Foki aufweist. Eine im Abbildungsraum positionierte Aufnahmevorrichtung nimmt das empfangene Bild aus dem Objektraum auf und teilt es in die verschiedenen Fokusebenen auf, indem die Wellenlängen der unterschiedlichen Foki separat ausgewertet werden, so dass pro Wellenlänge ein fokussiertes Bild entsteht. Messverfahren sind in diesem Zusammenhang Verfahren zur optischen Messung von Grössen , Tiefen, Mengen, Geschwindigkeiten und/oder Anwesenheit von Partikeln. Bevorzugt werden bei handelsüblichen RGB-Kameras drei Wellenlängen, beispielsweise rot (656 nm, Fraunhoferlinie C), grün (587 nm, Fraunhoferlinie d) und blau (486 nm, Fraunhoferlinie F), verwendet. Die verwendeten Wellenlängen sind beispielhaft zu verstehen und wurden stellvertretend für die drei Grundfarben ausgewählt. Für eine Messung sollten die verwendeten Wellenlängen auf die verwendete Kamera abgestimmt sein. Dies hat den Vorteil, dass im Falle einer Tiefenmessung genauer und über einen grösseren Bereich gemessen werden kann und im Falle einer schnellen Partikelmessung bei gleicher Auflösung schneller und genauer detektiert werden kann. Für eine weitere Optimierung wäre es denkbar eine weitere Wellenlänge zwischen der F- und der d-Linie zu verwenden oder auch generell andere Wellenlängen, wobei die verwendete Aufnahmevorrichtung auf diese Wellenlängen abgestimmt sein muss.

Ein weiterer Aspekt der Erfindung betrifft die Verwendung einer nicht-farblängsfehler-korrigierten Optik oder einer Optik, in die gezielt ein Farblängsfehler eingebracht wurde zum Erhöhen der Schärfentiefe in einem Messverfahren.

Eine erfindungsgemässe, nicht-farblängsfehler-korrigierte Optik ist vorgängig beschrieben. Für Messvorrichtungen, die baulängenbegrenzt sind, ist es zweckmässig, weitere optische Elemente einzufügen, um die Baulänge der Vorrichtung zu optimieren.

Um die mit der erfindungsgemässen Vorrichtung mittels des erfindungsgemässen Verfahrens aufgenommenen Bilder auswerten zu können, ist eine Rechneranordnung sowie ein Computerprogrammprodukt nötig, die die Fokusebenen des Bildes aus der Aufnahmevorrichtung in Farbauszüge aufteilt.

Die Erfindung wird nachfolgend in Ausführungsbeispielen anhand von Figuren näher erläutert.

Hierbei zeigt
Figur 1 einen Schnitt durch Objektraum und Abbildungsoptik
Figur 2 einen Gesamtschnitt durch die Vorrichtung
Figur 3 Darstellung der Fokusabhängigkeit der Bildschärfe für die drei Farben
Figur 4 Kontrastübertragungsfunktion
Figur 5 Strehl-Zahl der einzelnen Wellenlängen im Objektraum.

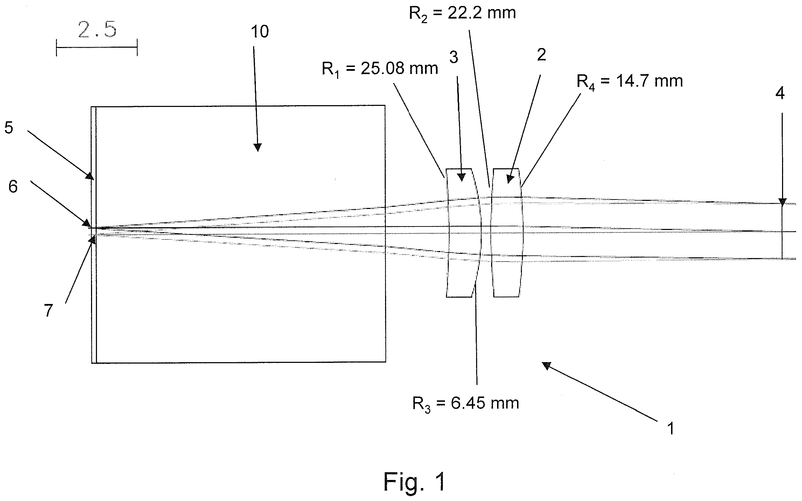

Figur 1 zeigt die Abbildungsoptik 1, die zwei Linsen, eine Bi-Konvexlinse 2 und eine Plan-Konvexlinse 3 und eine Blende 4 umfasst. Das aus mindestens zwei Wellenlängen bestehende Licht verläuft durch die Blende, wird an den Linsen gebrochen, wobei ein Farblängsfehler entsteht, der nicht korrigiert wird. Im Objektraum 5 liegt der Fokus des kurzwelligeren Lichts 6 (486 nm) in einer anderen Ebene als der Fokus des langwelligeren Lichts 7 (656 nm). In der vorliegenden Ausführungsform besitzt der Objektraum eine Tiefe von 250 µm, der Abstand der Blende 4 zur Bi-Konvex-Linse 2 beträgt 8 mm. Die Bi-Konvexlinse 2 und die Plan-Konvexlinse 3 bestehen aus N-BK7-Kronglas. Es wird neben dem Farblängsfehler auch ein Farbquerfehler induziert, der für diese Anwendung nicht korrigiert wird. Die optischen Parameter der Linse 2 und 3 sind Linsendurchmesser 4 mm, Mittendicke 1 mm. Die Radien beider Linsen sind in der Zeichnung angegeben. Der Abstand zwischen Konvexlinse 2 und Plan-Konvexlinse 3 beträgt 0.3 mm
Durch den Objektraum 5 strömt ein Fluid oder ein Gas, das Partikel enthält, die detektiert und/oder in ihrer Grösse gemessen werden. Der Objektraum ist durch ein Schutzglas 10 von der Abbildungsoptik getrennt. Dieses Schutzglas 10 dient der Aufnahme des im Objektraum vorhandenen Drucks. Das Schutzglas muss in der optischen Berechnung berücksichtig werden. Die Ausdehnung des Schutzglases entlang der optischen Achse beträgt 9 mm.

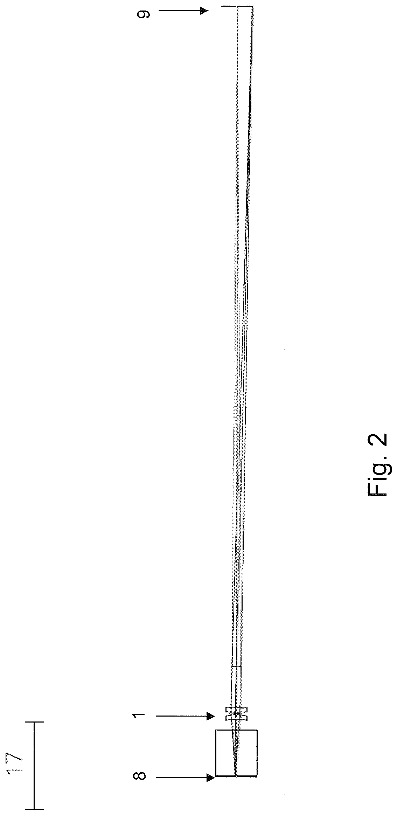

Figur 2 zeigt eine Übersicht über die gesamte Messvorrichtung. In einem Objektraum 8 befinden sich zu messende Partikel. Über eine Abbildungsoptik 1 wird ein Bild aus dem Objektraum 8 in den Abbildungsraum 9 übertragen. Die Baulänge der Messvorrichtung beträgt ca. 15 cm. Mittels geeigneter optische Elemente, kann diese Baulänge weiter verkürzt werden.

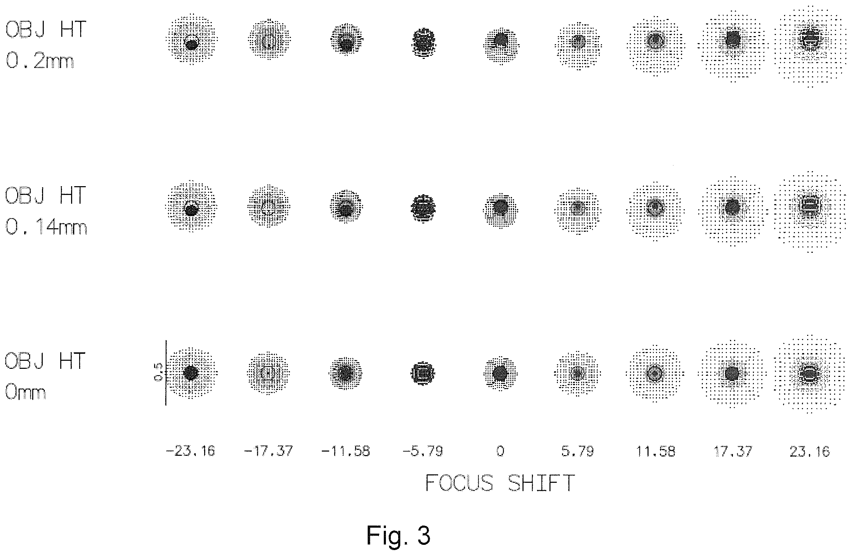

Figur 3 zeigt den Fokus Shift der in Figur 1 und 2 gezeigten Abbildungsoptik. Der Bereich der abbildungsseitigen Defokussierung (FOCUS SHIFT) ist auf +/-23.16 mm ausgedehnt worden. Dies entspricht einer objektseitigen Defokussierung von +/-0.1mm. Der Nullpunkt der Defokussierung liegt bei der optimalen Bildebene für die mittlere Wellenlänge (588nm, grün). Die Unschärfen werden in der Bildebene dargestellt und sind im Vergleich zur Objektebene um den Abbildungsmassstab der Optik 15.2-fach vergrössert. Im Bereich 11.58 mm ist de rote Wellenlänge fokussiert und stellt den kleinsten Kreis in der Figur dar. Die Unschärfe der grünen Wellenlänge hat zugenommen und wird durch den mittleren Kreis dargestellt. Die blaue Wellenlänge hat die grösste Unschärfe, wie durch den grossen gepunkteten Kreis gezeigt. In der anderen Richtung ist bei -17.37 mm die blaue Wellenlänge fokussiert, während die Unschärfe von grün (mittlerer Kreis) und rot (grosser Kreis) zugenommen haben. Dargestellt ist des Weiteren der Farbquerfehler der verwendeten Abbildungsoptik, der sich in einer Verschiebung des Fokus entlang der y-Achse zeigt. Der Farbquerfehler kann korrigiert werden, ist im aktuellen Ausführungsbeispiel aber vernachlässigbar.

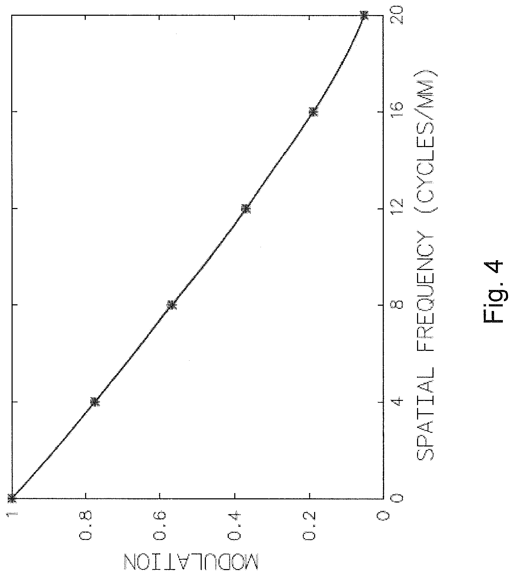

Figur 4 zeigt die Kontrastübertragungsfunktion der erfindungsgemässen Optik. Diese beschreibt den Kontrastverlust des erfindungsgemässen Abbildungsoptik 1. Die Abbildung zeigt die Kontrastübertragungsfunktion beispielhaft für die Farbe grün im Fokuspunkt. Die Kurve überlagert sich mit der Kurve für eine perfekte Optik.

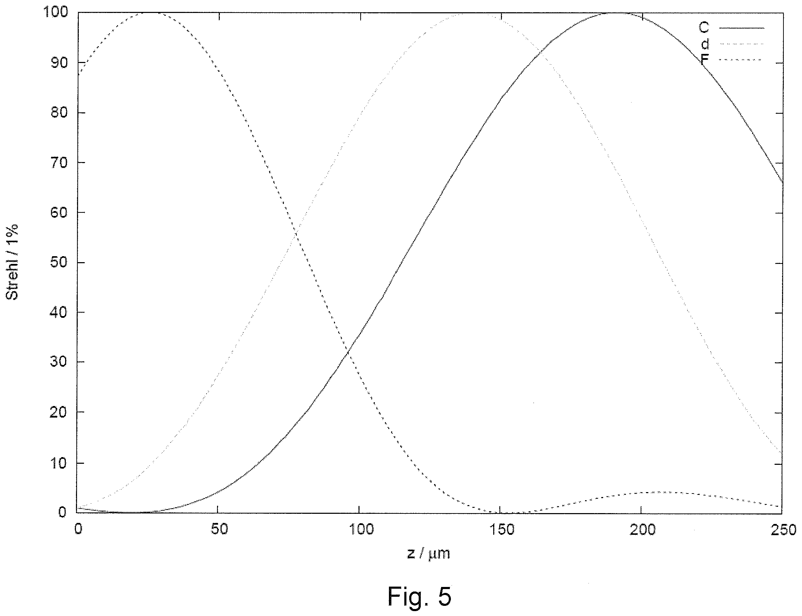

Figur 5 zeigt die Fokuslage der drei verwendeten Wellenlängen im Objektraum 8, der eine Ausdehnung von z = 250 µm aufweist. Der Fokus der kürzesten Wellenlänge (Fraunhoferlinie F, 486 nm) liegt bei ca. z = 25 µm, der Fokus der mittleren Wellenlänge (Fraunhoferlinie d, 587 nm) bei ca. z = 140 µm und der Fokus der längsten Wellenlänge (Fraunhoferlinie C, 656 nm) bei z = 190 µm. Für die Detektion oder Messung eines Partikels, der sich im Bereich von ca. z = 0-75 µm befindet, wird also die blaue Wellenlänge (Fraunhoferlinie F, 486 nm) verwendet, im Bereich von ca. z = 76-150 die grüne Wellenlänge (Fraunhoferlinie d, 587 nm) und im Bereich von ca. z = 151-250 die rote Wellenlänge (Fraunhoferlinie C, 656 nm).

## Patentansprüche

1. Vorrichtung zur Erfassung von Bildern in einem Messverfahren zur Messung der Grösse, Menge und/oder Anwesenheit oder Geschwindigkeit von Partikeln in einem Fluid oder Gas oder in einem Verfahren zur Tiefenmessung, umfassend eine Abbildungsoptik (1), welche für wenigstens zwei unterschiedliche Wellenlängen unterschiedliche Foki aufweist, einen Objektraum(8), einen Abbildungsraum (9), wobei im Abbildungsraum (9) ein Bild vom Objektraum (8) abgebildet ist, wobei im Abbildungsraum (9) eine elektronische Aufnahmevorrichtung positioniert ist, die das empfangene Bild aus dem Objektraum (8) aufnimmt, mit der für jede der Wellenlängen ein separates Bild in einer Aufnahme erzeugbar ist, so dass pro Wellenlänge ein fokussiertes Bild entsteht, und das aufgenommene Bild in Farbauszüge mit einem Auszug pro Wellenlänge zerlegt wird, wobei die Vorrichtung mit einer Beleuchtungseinrichtung versehen ist, mit der der Objektraum (8) beleuchtbar ist, wobei, die Beleuchtungseinrichtung bezüglich einer zur optischen Achse senkrecht angeordneten im Wesentlichen durch die Mitte des Objektraum verlaufenden Ebene, dem Abbildungsraum (9) gegenüber angeordnet ist.

2. Vorrichtung nach Anspruch 1, **dadurch gekennzeichnet, dass** in der Abbildungsoptik (1) mindestens eine Bi-Konvexlinse (2) und eine Blende (4) angeordnet sind.

3. Vorrichtung nach Anspruch 1 oder 2, **dadurch gekennzeichnet, dass** die Aufnahmevorrichtung eine Farbkamera ist.

4. Vorrichtung nach Anspruch 3, **dadurch gekennzeichnet, dass** die Bilder der einzelnen Wellenlängen separat auslesbar sind.

5. Vorrichtung nach Anspruch 2 oder 3, **dadurch gekennzeichnet, dass** eine im Wesentlichen plan-konvexe oder im Wesentlichen konkav-konvexe Linse (3) zwischen der Bi-Konvexlinse (2) und dem Objektraum (8) in der Abbildungsoptik (1) angeordnet ist.

6. Vorrichtung nach einem der Ansprüche 1 bis 5, **dadurch gekennzeichnet, dass** die Linsen in der Abbildungsoptik (1) aus Kronglas bestehen.

7. Vorrichtung nach Anspruch 6, **dadurch gekennzeichnet, dass** das Kronglas N-BK7-Glas oder ein äquivalentes Glas eines anderen Herstellers ist.

8. Vorrichtung nach einem der Ansprüche 1 bis 7, **dadurch gekennzeichnet, dass** die Beleuchtungseinrichtung mit einer Beleuchtungsoptik versehen ist, welche spiegelsymmetrisch zur Abbildungsoptik (1) bezüglich der Mittelebene des Objektraumes (8) aufgebaut ist.

9. Vorrichtung nach einem der vorhergehenden Ansprüche, **dadurch gekennzeichnet, dass** die Schärfentiefe pro Wellenlänge im Wesentlichen dem Abstand zwischen den Fokusebenen entspricht.

10. Messverfahren zur Messung der Grösse, Menge und/oder Anwesenheit oder Geschwindigkeit von Partikeln in einem Fluid oder Gas oder zur Tiefenmessung, bei dem aus verschiedenen Wellenlängen bestehendes einfallendes Licht durch eine Abbildungsoptik (1) in einem Abbildungsraum (9) ein Bild von einem Objektraum (8) abbildet, wobei die Abbildungsoptik (1) innerhalb des Objektraums (8) für wenigstens zwei Wellenlängen unterschiedliche Foki aufweist, wobei eine im Abbildungsraum (9) positionierte Aufnahmevorrichtung das empfangene Bild aus dem Objektraum (8) aufnimmt und in die verschiedenen Fokusebenen aufteilt, indem separate Bilder für jede der Wellenlängen erzeugt werden, so dass pro Wellenlänge ein fokussiertes Bild entsteht, und das aufgenommene Bild aus dem Objektraum in Farbauszüge mit einem Auszug pro Wellenlänge zerlegt wird, wobei der Objektraum (8) von einer Beleuchtungseinrichtung beleuchtet wird, welche derart angeordnet ist, dass die Beleuchtungseinrichtung bezüglich einer zur optischen Achse senkrecht angeordneten im Wesentlichen durch die Mitte des Objektraum verlaufenden Ebene dem Abbildungsraum (9) gegenüber liegt.

11. Verfahren nach Anspruch 10, **dadurch gekennzeichnet dass** das Messverfahren zur Messung der Grösse von Partikeln in einem Fluid oder Gas verwendet wird.

12. Verfahren nach Anspruch 10 oder 11, **dadurch gekennzeichnet, dass** das Messverfahren zur Messung des Abstands der Partikel oder deren Oberfläche vom Abbildungsraum verwendet wird.

13. Vorrichtung nach einem der Ansprüche 1 bis 9 **dadurch gekennzeichnet, dass** eine Rechneranordnung vorgesehen ist, die Bilder aus der Aufnahmevorrichtung verarbeitet, so dass die Fokusebenen des Bildes aus der Aufnahmevorrichtung in separate Farbebenen aufgeteilt sind.

14. Computerprogrammprodukt, das ein Verfahren gemäss einem der Ansprüche 10 bis 12 durchführt.

## Claims

1. Device for acquiring images in a measuring method for measuring the size, quantity and/or presence or velocity of particles in a fluid or gas or in a method for depth measurement, comprising an imaging optics (1), which has different foci for at least two different wavelengths, an object space (8), an imaging space (9), an image of the object space (8) being projected in the imaging space (9), an electronic recording device being positioned in the imaging space (9), which recording device records the received image from the object space (8), with which for each of the wavelengths a separate image can be produced in a recording such that one focussed image is produced per wavelength, and the recorded image is divided into colour separations with one separation per wavelength, wherein the device is provided with an illumination device with which the object space (8) can be illuminated, wherein the illumination device is arranged opposite the imaging space (9) with respect to a plane arranged perpendicular to the optical axis and extending substantially through the centre of the object space.

2. Device according to claim 1, **characterised in that** at least one bi-convex lens (2) and an aperture (4) are arranged in the imaging optics (1).

3. The device according to claim 1 or 2, **characterised in that** the imaging device is a colour camera.

4. The device according to claim 3, **characterized in that** the images of the individual wavelengths can be read out separately.

5. The device according to claim 2 or 3, **characterized in that** a substantially plano-convex or substantially concave-convex lens (3) is arranged between the bi-convex lens (2) and the object space (8) in the imaging optics (1).

6. The device according to any one of claims 1 to 5, **characterised in that** the lenses in the imaging optics (1) consist of crown glass.

7. The device according to claim 6, **characterized in that** the crown glass is N-BK7 glass or an equivalent glass of another manufacturer.

8. The device according to one of claims 1 to 7, **characterised in that** the illumination device is provided with an illumination optical system which is constructed mirror-symmetrically to the imaging optics (1) with respect to the central plane of the object space (8).

9. The device according to one of the preceding claims, **characterized in that** the depth of focus per wavelength substantially corresponds to the distance between the focal planes.

10. Measuring method for measuring the size, quantity and/or presence or velocity of particles in a fluid or gas or for depth measurement, in which incident light consisting of different wavelengths projects an image of an object space (8) through imaging optics (1) in an imaging space (9), wherein the imaging optics (1) within the object space (8) have different foci for at least two wavelengths, wherein a recording device positioned in the imaging space (9) takes the received image from the object space (8) and divides it into the different focal planes, in that separate images are generated for each of the wavelengths, so that a focused image is produced per wavelength, and the recorded image from the object space is divided into colour separations with one separation per wavelength, the object space (8) being illuminated by an illumination device which is arranged in such a way that the illumination device is located opposite the imaging space (9) with respect to a plane arranged perpendicular to the optical axis and extending substantially through the centre of the object space.

11. The method according to claim 10, **characterized in that** the measuring method is used for measuring the size of particles in a fluid or gas.

12. The method according to claim 10 or 11, **characterized in that** the measuring method is used for measuring the distance of the particles or their surface from the imaging space.

13. The apparatus according to one of claims 1 to 9, **characterized in that** a computer arrangement is provided which processes images from the recording apparatus so that the focal planes of the image from the recording apparatus are divided into separate colour planes.

14. A computer program product which performs a process according to any one of claims 10 to 12.

## Revendications

1. Dispositif pour l'acquisition d'images dans un procédé de mesure pour la mesure de la taille, de la quantité et/ou de la présence ou de la vitesse de particules dans un fluide ou un gaz ou dans un procédé de mesure de la profondeur, comprenant une optique de projection (1) qui présente des foyers différents pour au moins deux longueurs d'onde différentes, un espace objet (8), un espace de projection (9), une image de l'espace objet (8) étant projetée dans l'espace de projection (9), un dispositif d'imagerie électronique étant positionné dans l'espace de projection (9), lequel dispositif d'imagerie enregistre l'image reçue de l'espace objet (8), avec lequel, pour chacune des longueurs d'onde, une image séparée peut être produite dans un enregistrement, de sorte qu'une image focalisée est produite par longueur d'onde, et l'image enregistrée est décomposée en séparations de couleur avec une séparation par longueur d'onde, le dispositif étant pourvu d'un dispositif d'éclairage avec lequel l'espace objet (8) peut être éclairé, le dispositif d'éclairage étant disposé en face de l'espace image (9) par rapport à un plan perpendiculaire à l'axe optique et passant sensiblement par le centre de l'espace objet.

2. Dispositif selon la revendication 1, **caractérisé en ce qu'**au moins une lentille biconvexe (2) et un diaphragme (4) sont disposés dans l'optique de projection (1).

3. Dispositif selon la revendication 1 ou 2, **caractérisé en ce que** le dispositif d'imagerie est une caméra couleur.

4. Dispositif selon la revendication 3, **caractérisé en ce que** les images des différentes longueurs d'onde peuvent être lues séparément.

5. Dispositif selon la revendication 2 ou 3, **caractérisé en ce qu'**une lentille (3) essentiellement piano-convexe ou essentiellement concave-convexe est disposée entre la lentille biconvexe (2) et l'espace objet (8) dans l'optique de projection (1).

6. Dispositif selon l'une quelconque des revendications 1 à 5, **caractérisé en ce que** les lentilles de l'optique d'imagerie (1) sont constituées de verre crown.

7. Dispositif selon la revendication 6, **caractérisé en ce que** le verre crown est un verre N-BK7 ou un verre équivalent d'un autre fabricant.

8. Dispositif selon l'une des revendications 1 à 7, **caractérisé en ce que** le dispositif d'éclairage est pourvu d'une optique d'éclairage qui est réalisée de manière symétrique à l'optique de projection (1) par rapport au plan central de l'espace objet (8).

9. Dispositif selon l'une des revendications précédentes, **caractérisé en ce que** la profondeur de champ par longueur d'onde correspond sensiblement à la distance entre les plans focaux.

10. Procédé de mesure pour mesurer la taille, la quantité et/ou la présence ou la vitesse de particules dans un fluide ou un gaz ou pour la mesure de la profondeur, dans lequel une lumière incidente constituée de différentes longueurs d'onde représente une image d'un espace objet (8) à travers une optique de projection (1) dans un espace de projection (9), dans lequel l'optique de formation d'image (1) à l'intérieur de l'espace objet (8) présente des foyers différents pour au moins deux longueurs d'onde, dans lequel un dispositif d'enregistrement positionné dans l'espace de formation d'image (9) prend l'image reçue de l'espace objet (8) et la divise en les différents plans focaux, en ce que des images séparées sont produites pour chacune des longueurs d'onde, de sorte qu'une image focalisée est produite par longueur d'onde, et l'image enregistrée est divisée à partir de l'espace objet en séparations de couleur avec une séparation par longueur d'onde, l'espace objet (8) étant éclairé par un dispositif d'éclairage qui est disposé de telle sorte que le dispositif d'éclairage est opposé à l'espace image (9) par rapport à un plan disposé perpendiculairement à l'axe optique et s'étendant sensiblement par le centre de l'espace objet.

11. Procédé selon la revendication 10, **caractérisé en ce que** le procédé de mesure est utilisé pour mesurer la taille des particules dans un fluide ou un gaz.

12. Procédé selon la revendication 10 ou 11, **caractérisé en ce que** le procédé de mesure est utilisé pour mesurer la distance des particules ou de leur surface par rapport à l'espace de formation d'image.

13. Appareil selon l'une des revendications 1 à 9, **caractérisé en ce qu'**il est prévu un dispositif informatique qui traite les images provenant de l'appareil d'enregistrement de telle sorte que les plans focaux de l'image provenant de l'appareil d'enregistrement sont divisés en plans de couleur séparés.

14. Produit de programme d'ordinateur qui exécute un processus selon l'une quelconque des revendications 10 à 12.
